# FASCICULE DE BREVET EUROPEEN

(11) **EP 0 550 340 B1**
(45) Date de publication et mention de la délivrance du brevet: **06.11.1996**
(21) Numéro de dépôt: 92403570.2
(22) Date de dépôt: 29.12.1992
(51) Int. Cl.: G05D 7/06

(54) **Procédé de modulation en continu d'un débit de fluide, à l'aide d'un clapet séquentiel commandé électriquement**
Stetiges Modulationsverfahren für die Durchflussmenge einer Flüssigkeit mit Hilfe eines Ventils das sequentiel elektrisch gesteuert wird
Procedure of continuous modulation of a fluid flow with the aid of a sequential electrically commanded valve

(30) Priorité: 31.12.1991 FR 9116415
(43) Date de publication de la demande: 07.07.1993
(73) Titulaire: GAZ DE FRANCE, 75017 Paris (FR)
(72) Inventeur: Meslif, Alain, F-95270 Saint Martin du Tertre (FR)
(74) Mandataire: Durand, Yves Armand Louis

(56) Documents cités:
- EP-A- 0 048 440
- DE-A- 3 943 357
- FR-A- 2 395 464
- FR-A- 2 417 800
- US-A- 3 765 452
- US-A- 4 434 933
- ELECTRONICS & WIRELESS WORLD. vol. 93,no. 1614, Avril 1987, SUTTON GB pages 415 - 420 FRIEDMAN 'Modulated-puseamplifiers revived'

## Description

La présente invention se rapporte à un procédé de modulation en continu d'un débit de fluide, à l'aide d'un clapet séquentiel commandé électriquement.

On connaît divers procédés de modulation d'un débit de fluide, par exemple pour ajuster l'alimentation en gaz combustible d'un appareil de cuisson ou de chauffage.

Dans l'art antérieur, on a proposé de moduler le débit de gaz pour de tels appareils en prévoyant dans une voie ou conduite de passage des gaz qui relie l'appareil à une source de gaz sous pression, un robinet à boisseau profilé. Les robinets de ce type permettent de régler un débit de fluide "en continu", c'est-à-dire progressivement par variation de l'aire en section de cette voie de passage, et peuvent être commandés soit manuellement, soit électriquement à l'aide de touches, curseurs ou potentiomètres agissant par exemple sur un moteur pas-à-pas solidaire du boisseau.

Toutefois, les dispositifs connus à robinet motorisé sont généralement encombrants, mécaniquement complexes et coûteux, de sorte qu'ils ne sont pas appropriés pour moduler économiquement le débit d'appareils aux dimensions réduites, tels qu'une plaque de cuisson dont l'épaisseur ne doit pas dépasser 30 mm.

Par ailleurs, on sait moduler le débit d'un fluide, non pas en faisant varier l'aire de la section de passage des gaz, mais en interrompant alternativement ou séquentiellement le flux de gaz dans ce passage. On peut ainsi réduire la quantité de gaz fournie à l'appareil par unité de temps. Pour ce faire, on prévoit souvent un clapet à commande électrique dans la voie de passage, ce clapet débattant à une fréquence fixe et prédéterminée entre une position d'ouverture et une position de fermeture de ladite voie de passage.

Bien que ce procédé rend possible l'ajustement de la durée de débattement du clapet, il ne permet pas de moduler en continu et avec précision, entre un débit maximum et un débit minimum, le flux de gaz fourni à l'appareil. En outre, dans le cas d'appareils comportant un brûleur, la flamme de ce dernier s'éteint si la fréquence de débattement du clapet est trop basse.

On connaît aussi d'après la revue "Electronics and wireless world" (Monde de l'électronique sans fil), vol 93, n° 1614, avril 1987, Sutton GB, Friedman "Modulated-pulse amplifiers revived" (Renouvellement des amplificateurs modulés en impulsion), pages 415-420, des transistors ayant une fréquence de fonctionnement de 2Hz.

Le document FR-A-2 417 800 concerne un appareil de commande pour un dispositif de réglage du débit d'un fluide, fonctionnant à une fréquence comprise entre 1/60 et 1Hz, pour administrer à un patient un débit de solution intraveineuse compris entre 18 et 199 cm³/H.

Mais, ces deux derniers documents ne visent absolument pas l'application à un brûleur de gaz.

Le document US-A-3 765 452 est quant à lui conforme au préambule de la revendication 1.

Aussi, l'invention a pour but de proposer un procédé de modulation en continu d'un débit de fluide, qui soit sans danger, précis et économique, tout en pouvant s'appliquer à des appareils de taille réduite.

A cet effet, l'invention a pour objet un procédé de modulation d'un débit de gaz, du type consistant à déplacer un clapet entre une position d'ouverture et une position de fermeture d'une voie de passage du gaz vers un brûleur à alimenter avec celui-ci, le déplacement du clapet étant commandé par un signal électrique variant entre deux valeurs fixes, la fréquence de variation du signal vers l'une de ces valeurs étant fixe, tandis que la période de maintien du signal en l'autre valeur varie en fonction du débit à obtenir, caractérisé en ce qu'il consiste à déplacer alternativement le clapet entre ses positions d'ouverture et de fermeture en fonction de la variation du signal vers les deux valeurs précitées, la fréquence fixe précitée étant comprise entre 20 et 30Hz, et de préférence de l'ordre de 25Hz.

Le procédé est aussi caractérisé en ce que le déplacement vers la position d'ouverture s'effectue à fréquence fixe, et la période de maintien en position fermée varie entre 0 et 100% de la durée séparant deux déplacements en position d'ouverture, exclusivement.

Suivant encore une autre caractéristique, le clapet précité est monté mobile dans un boîtier étanche intégré à la voie de passage précitée et comportant des raccords d'entrée et de sortie de fluide, ainsi qu'un électro-aimant apte à déplacer ledit clapet entre ses positions d'ouverture et de fermeture, pour respectivement dégager et obturer le raccord de sortie, et dont la voie de passage.

Un premier mode de réalisation de l'invention se caractérise en ce que le clapet est monté dans le boîtier par l'intermédiaire d'un bras oscillant sollicité constamment par un ressort vers la position de fermeture du clapet, et venant en appui contre une butée amortissante lorsque le clapet est en position d'ouverture.

Un second mode de réalisation est caractérisé en ce que le clapet est monté dans le boîtier par l'intermédiaire d'une lame flexible constamment sollicitée par un ressort vers la position de fermeture du clapet, et encastrée dans le boîtier par son extrémité opposée à l'electro-aimant.

On notera ici que le signal électrique est une tension généralement positive et de forme carrée, délivrée à l'électro-aimant après amplification par un dispositif modulateur raccordé d'une part à un réseau d'alimentation en courant alternatif, et d'autre part à un système de réglage.

Le procédé est encore caractérisé en ce que le dispositif modulateur précité transforme en courant continu le courant du réseau d'alimentation, avant de le moduler en signal de commande d'après l'état du système de réglage, qui comprend une carte électronique reliée à un curseur analogique ou de préférence à des touches numériques.

En outre, on précisera que dans le procédé de l'invention, le boîtier du clapet ainsi que le dispositif modulateur sont intégrés dans l'appareil précité.

Mais d'autres caractéristiques et avantages de la présente invention ressortiront mieux de la description détaillée de deux modes de réalisation, donnés uniquement à titre d'exemples, qui suit et se réfère aux dessins annexés, dans lesquels :
La figure 1 représente schématiquement un appareil de cuisson dont le débit de gaz est modulé suivant le procédé conforme à l'invention ;
la figure 2 est un graphique illustrant un exemple conforme à l'invention de modulation à flux réduit d'un débit de fluide, avec en abscisses le temps et en ordonnées les positions d'un clapet séquentiel ;
la figure 3 est un graphique similaire à la figure 2, mais illustrant un exemple de modulation à flux élevé d'un débit de fluide ;
la figure 4 est une vue en coupe partielle d'un premier mode de réalisation de clapet séquentiel conforme à l'invention, représenté en position de fermeture ;
la figure 5 est une vue similaire à la figure 4, mais illustrant la position d'ouverture du clapet ;
la figure 6 est une vue en coupe partielle d'un second mode de réalisation de clapet séquentiel conforme à l'invention, représenté en position de fermeture ;
la figure 7 est une vue similaire à la figure 6, mais illustrant la position d'ouverture du clapet.

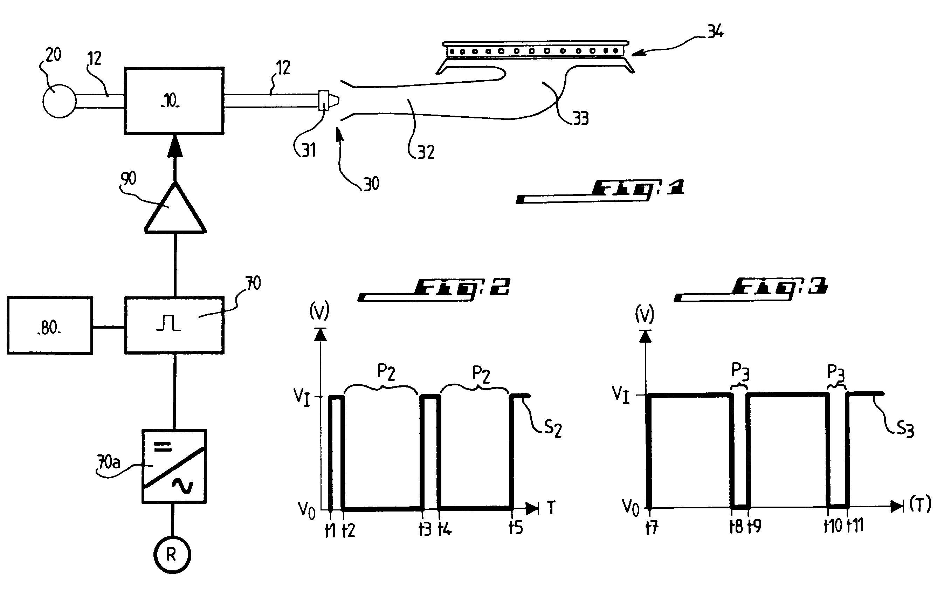

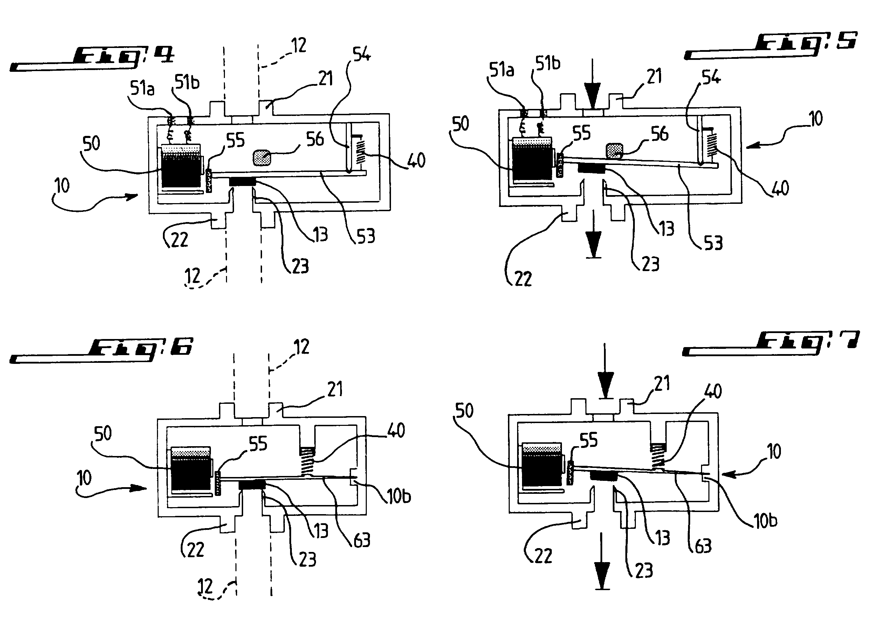

En se reportant tout d'abord aux figures 1, 4 et suivantes, on voit un boîtier 10 prévu dans une voie ou conduite de passage 12 qui s'étend depuis une source de fluide sous pression 20, vers un appareil 30 à alimenter avec ce fluide.

Plus spécialement, le boîtier 10 comporte un clapet à commande électrique 13 pouvant être déplacé alternativement ou séquentiellement entre une position d'ouverture (figures 5 et 7) et une position de fermeture (figures 4 et 6) de la conduite 12, afin de procéder à la modulation du débit d'un gaz combustible tel que gaz naturel, butane ou analogue pour l'appareil 30, ici une plaque de cuisson. Evidemment, l'appareil 30 peut aussi être de tout autre type, comme par exemple l'appareil de chauffage.

Conformément au procédé de l'invention, la fréquence des déplacements séquentiels vers l'une des positions d'ouverture ou de fermeture du clapet 13 est constante, tandis que la période de maintien de ce clapet 13 dans l'autre position varie en fonction de la modulation en continu du débit que l'on désire obtenir.

On voit sur les figures 2 et 3 respectivement des signaux S2 et S3 de commande du clapet 13. Chacun de ces signaux S2, S3 dont l'enveloppe a une forme carrée ou en créneaux, varie instantanément entre deux valeurs fixes VO et VI, pour que la tension des signaux S2 et S3 soit constamment supérieure (VI) ou égale (VO) à zéro volts.

Au vu des diagrammes de S2 et S3, on comprend que VI est une tension dite d'activation sous l'effet de laquelle le clapet 13 est déplacé et maintenu dans sa position d'ouverture de la voie de passage 12 (figures 5 et 7), tandis que VO est une tension sensiblement nulle dite de relâchement, de sorte que le clapet se déplace vers sa position de fermeture de la voie 12, tant que la tension du signal S2 ou S3 est égale à cette valeur VO (figures 4 et 6).

Suivant l'exemple illustré, c'est la fréquence des variations de la tension des signaux S2, S3 survenant aux instants t1 ; t3 ; t5; t7 ; t9 et t11 qui est fixe. De fait, puisque la tension V des signaux S2 et S3 passe de la valeur VO à la valeur VI à intervalles réguliers, le clapet 13 qui est commandé par ces tensions de relâchement et d'activation respectivement, se déplace à fréquence constante depuis sa position d'obturation vers sa position d'ouverture. De fait, la modulation de débit est obtenue en faisant varier la longueur de la période durant laquelle le clapet 13 est maintenu en position d'obturation de la voie 12. Cette longueur variable correspond sur la figure 2 aux périodes désignées en P2 (entre t2 et t3 ; t4 et t5) et correspond sur la figure 3 aux périodes indiquées en P3 (entre t8 et t9 ; t 10 et t11) où la tension V des signaux S2, S3 est égale VO.

Les périodes de maintien du clapet 13 en position d'obturation peuvent varier entre 0 et 100 % (exclusivement) de la durée séparant deux déplacements du clapet 13 en position d'ouverture. Evidemment, cette variation est possible à l'exclusion des valeurs limites de 0 et 100 % où le clapet 13 ne débat plus entre ses deux positions, mais reste constamment en position d'ouverture et en position d'obturation respectivement. Ainsi, comme les périodes correspondant à l'un (VI) ou l'autre (VO) états des signaux S2, S3 définissent les changements de position du clapet 13, on comprend que la figure 2 illustre une modulation de flux de fluide gazeux à faible débit puis la période (t1-t2) correspondant à la position d'ouverture est nettement plus courte que la période P2 (t2-t3) correspondant à la position d'obturation de la conduite de passage 12. De même la figure 3 illustre une modulation à débit important puisque la période (t7-t8) d'ouverture du clapet 13 est nettement plus longue que la période P3 (t8-t9) d'obturation.

Dans le cas où, comme on le voit sur la figure 1, l'appareil 30 comporte un brûleur 34 raccordé à la conduite 12 par un venturi 32 et un détendeur 33, la fréquence des débattements du clapet 13 devra être choisie de manière à éviter que l'obturation de ce dernier n'entraîne l'extinction de la flamme du brûleur. Aussi, la fréquence constante précitée est toujours supérieure à 20Hz, et est de préférence comprise entre 25 et 30Hz.

En se reportant aux figures 4 à 7, deux modes de réalisation de boîtier 10 vont être successivement décrits. Pour ces deux modes de réalisation, les parties identiques ou similaires sont désignées par les mêmes références numériques.

Dans les deux modes de réalisation illustrés, le clapet 13 est monté mobile dans un boîtier 10 qui est étanche et intégré à la voie de passage 12, comme on l'a représenté en pointillés sur les figures 4 et 6. Chaque boîtier étanche 10 comprend un raccord d'entrée 21 sur lequel la partie de la conduite 12 qui est raccordée à la source de fluide sous pression 20 est montée de façon étanche. Similairement, chaque boîtier 10 comprend un raccord de sortie 22 sur lequel un tronçon de la conduite 12 qui est relié à l'appareil 30 proprement dit (ici par l'intermédiaire d'un injecteur 31), est monté de façon étanche. On voit sur les figures 4 à 7 que le clapet 13 est disposé en regard d'un col 23 du raccord de sortie 22, de façon à obturer ce raccord 22, et donc la conduite 12 lorsqu'il est en position d'obturation. En d'autres termes, le clapet 13 est disposé dans le boîtier 10 de façon à venir en contact étanche contre le col 23 du raccord 22, et ainsi empêcher toute circulation de gaz entre la source 20 et l'appareil 30, comme ceci est visible sur les figures 4 et 6. Par contre, comme indiqué par les flèches des figures 5 et 7, quand le clapet 13 et le col 23 sont séparés, un flux de fluide sous pression peut circuler dans la voie 12, au travers du boîtier 10.

Suivant le premier mode de réalisation des figures 4 et 5, le clapet 13 est monté dans le boîtier 10 par l'intermédiaire d'un bras oscillant 53. Plus précisément, le bras oscillant 53 est monté sur un pivot 54 et est constamment sollicité vers sa position d'obturation du raccord 22 par un ressort hélicoïdal 40. Le pivot 54 et le ressort 40 sont disposés à proximité d'une extrémité du bras oscillant 53, tandis qu'un élément sensible au magnétisme tel qu'une pastille ferromagnétique 45 est fixée à l'autre extrémité du bras 53, en regard d'un électro-aimant 50 ou analogue.

L'électro-aimant 50 est alimenté électriquement par l'intermédiaire de deux fils 51a, 51b, qui traversent le boîtier 10 de façon étanche. Une pièce en matière élastique 56 est fixée à l'intérieur du boîtier 10 de façon que le bras oscillant 53 viennent en appui contre cette pièce 56 lorsque le clapet 13 est en position d'ouverture (figure 5). De fait, la pièce 56 fait office de butée amortissante pour éviter les effets de rebord du bras 53. Il va de soi que l'ensemble formé par la pastille 55, le clapet 13 et le bras 53 sera réalisé dans des matériaux suffisamment légers pour son inertie lui permette de fonctionner à la fréquence choisie.

Suivant le second mode de réalisation des figures 6 et 7, le clapet 13 est monté dans le boîtier 10 par l'intermédiaire d'une lame flexible 63 qui est elle aussi constamment sollicitée par un ressort 40. La lame 63 est encastrée dans une partie appropriée 10b du boîtier 10, au niveau de son extrémité opposée à l'électro-aimant 50.

On comprend déjà que dans les premier et second modes de réalisation, la tension d'alimentation (proportionnelle VO ou VI) de l'électroaimant 50 permet d'exercer sur la pastille 55 un effort magnétique séquentiel opposé à l'action des ressorts 40, pour dégager les raccords de sortie 22.

On notera ici que la commande électrique du clapet 13 s'effectue en fonction de signaux tels que S2 et S3, après amplification, par un dispositif modulateur 70 raccordé d'une part à un réseau d'alimentation courant alternatif R, et d'autre part à un système de réglage 80.

L'amplification des signaux de commande est effectuée par un amplificateur approprié 90 interposé entre le dispositif modulateur 70 et la bobine 50 du boîtier 10. Le dispositif modulateur 70 comprend également un transformateur 70a apte à changer en courant continu le courant alternatif du réseau d'alimentation R, avant de le moduler en signal de commande d'après l'état du système de réglage. Bien que ceci ne soit pas représenté, le système de réglage 80 comprend une carte électronique reliée à des organes de commande analogiques ou numériques. Ces organes de commande pourront être des curseurs ou potentiomètres analogiques, mais on préféra des touches ou contacts numériques dont l'esthétique est meilleure et l'encombrement plus réduit. De tels organes agissent sur la carte lorsqu'ils sont manipulés par un utilisateur, pour changer l'état du système 80 afin qu'il corresponde au débit de gaz souhaité. Suivant cet état, le dispositif 70 détermine la période de fermeture appropriée et module le signal de commande du clapet 13 en conséquence.

Il va de soi qu'un boîtier tel que le boîtier 10 peut être aisément réalisé avec des dimensions réduites de l'ordre 50 x 20 x 15 mm, dans le cas la puissance consommée par l'électro-aimant 50 notamment est inférieure à 2 watts. Une telle puissance est amplement suffisante pour un brûleur dont la puissance est de 3KW.

On a donc obtenu conformément à l'invention un procédé de modulation en continu d'un débit de fluide, qui est sans danger, précis et économique, tout en pouvant s'appliquer au réglage du débit de l'injecteur d'un brûleur à gaz combustible, de préférence pour un appareil de cuisson. Dans ce cas, le boîtier 10, l'amplificateur 90, le dispositif de modulation 70 ainsi que le système de commande 80 pourront être intégrés à l'appareil 30 afin d'améliorer l'esthétique et de réduire l'encombrement de cet appareil.

## Revendications

1. Procédé de modulation d'un débit de gaz, du type consistant à déplacer un clapet (13) entre une position d'ouverture et une position de fermeture d'une voie (12) de passage du gaz vers un brûleur (34) à alimenter avec celui-ci, le déplacement du clapet étant commandé par un signal électrique (S2, S3) variant entre deux valeurs fixes (VO, VI), la fréquence de variation (t3-t1) du signal vers l'une (VI) de ces valeurs étant fixe, tandis que la période (P2, P3) de maintien du signal en l'autre valeur (VO) varie en fonction du débit à obtenir, caractérisé en ce qu'il consiste à déplacer alternativement le clapet (13) entre ses positions d'ouverture et de fermeture en fonction de la variation du signal vers les deux valeurs (VO,VI) précitées, la fréquence fixe précitée étant comprise entre 20 et 30 Hz, et de préférence de l'ordre de 25 Hz.

2. Procédé selon la revendication 1, caractérisé en ce que le déplacement vers la position d'ouverture s'effectue à fréquence fixe, et la période de maintien en position fermée (P2, P3) varie entre 0 et 100% de la durée séparant deux déplacements en position d'ouverture, exclusivement.

3. Procédé selon la revendication 1 ou 2, caractérisé en ce que le clapet précité (13) est monté mobile dans un boîtier étanche (10) intégré à la voie de passage précitée (12) et comportant des raccords d'entrée (21) et de sortie (22) de fluide, ainsi qu'un électro-aimant (50) apte à déplacer ledit clapet (13) entre ses positions d'ouverture et de fermeture, pour respectivement dégager et obturer le raccord de sortie (22), et donc la voie de passage (12).

4. Procédé selon la revendication 3, caractérisé en ce que le clapet (13) est monté dans le boîtier (10) par l'intermédiaire d'un bras oscillant (53) sollicité constamment par un ressort (40) vers la position de fermeture du clapet, et venant en appui contre une butée amortissante (56) lorsque le clapet (13) est en position d'ouverture.

5. Procédé selon la revendication 3, caractérisé en ce que le clapet (13) est monté dans le boîtier (10) par l'intermédiaire d'une lame flexible (63) constamment sollicitée par un ressort (40) vers la position de fermeture du clapet, et encastrée (10b) dans le boîtier par son extrémité opposée à l'électro-aimant (50).

6. Procédé selon l'une des revendications 3 à 5, caractérisé en ce que le signal électrique (S2, S3) est une tension généralement positive et de forme carrée, délivrée à l'électro-aimant (50) après amplification par un dispositif modulateur (70) raccordé d'une part à un réseau d'alimentation en courant alternatif (R), et d'autre part à un système de réglage (80).

7. Procédé selon la revendication 6, caractérisé en ce que le dispositif modulateur (70) précité transforme en courant continu le courant du réseau d'alimentation, avant de le moduler en signal de commande d'après l'état du système de réglage (80), qui comprend une carte électronique reliée à un curseur analogique ou de préférence à des touches numériques.

8. Procédé selon l'une des revendications 1 à 7, caractérisé en ce que le boîtier (10) du clapet ainsi que le dispositif modulateur (70) sont intégrés dans l'appareil précité (30).

## Patentansprüche

1. Verfahren zur Modulierung einer Gasdurchsatzmengenleistung, derjenigen Gattung, die darin besteht, ein Ventil (13) zwischen einer Stellung zum Öffnen und einer Stellung zum Schliessen eines Durchgangsweges (12) des Gases zu einem mit diesem zu speisenden Brenner (34) zu verschieben, wobei die Verschiebung des Ventils durch ein zwischen zwei festgelegten Werten (VO, VI) veränderliches elektrisches Signal (S2, S3) gesteuert wird, wobei die Frequenz (t3-t1) der Veränderung des Signals zu einem (VI) dieser Werte festgelegt ist, während der Zeitraum (P2, P3) des Haltens des Signals beim anderen Wert (VO) sich in Abhängigkeit von der zu erzielenden Durchsatzmengenleistung verändert, dadurch gekennzeichnet, dass es darin besteht, das Ventil (13) zwischen seiner Öffnungs- und Schließstellung in Abhängigkeit von der Änderung des Signals zu den vorgenannten beiden Werten (VO, VI) hin abwechselnd zu bewegen, wobei die vorgenannte festgelegte Frequenz zwischen 20 und 30 Hz liegt und vorzugsweise in der Grössenordnung von 25 Hz ist.

2. Verfahren nach Anspruch 1, dadurch gekennzeichnet, dass die Verschiebung zu der Öffnungsstellung hin bei einer festgelegten Frequenz stattfindet und der Zeitraum (P2, P3) des Haltens in der Schließstellung zwischen 0 und 100 % der die beiden Verschiebungen ausschliesslich in die Öffnungsstellung trennenden Dauer verändert wird.

3. Verfahren nach Anspruch 1 oder 2, dadurch gekennzeichnet, dass das vorgenannte Ventil (13) in einem in dem vorgenannten Durchgangsweg (12) eingegliederten dichten Gehäuse (10) bewegbar angeordnet ist und welches Gehäuse Einlaß- und Auslaßstutzen (21) und (22) für das fließfähige Mittel sowie einen Elektromagnet (50) aufweist, der geeignet ist, das besagte Ventil (13) zwischen seiner Öffnungs- und Schließstellung zu verschieben, um den Auslaßanschlußstutzen (22) also den Durchgangsweg (12) jeweils freizulegen und zu verschliessen.

4. Verfahren nach Anspruch 3, dadurch gekennzeichnet, dass das Ventil (13) in dem Gehäuse (10) über einen schwingenden Arm (53) angeordnet ist, der ständig durch eine Feder (40) zu der Schließstellung hin des Ventils beaufschlagt wird und an einem dämpfenden Anschlag (56) zur Abstützung kommt, wenn das Ventil (13) in der Öffnungsstellung ist.

5. Verfahren nach Anspruch 3, dadurch gekennzeichnet, dass das Ventil (13) in dem Gehäuse (10) über einen biegsamen Streifen (63) angeordnet ist, der ständig durch eine Feder (40) zu der Schließstellung hin des Ventils beaufschlagt wird und mit seinem dem Elektromagnet (50) entgegengesetzten Ende in dem Gehäuse eingespannt (10b) ist.

6. Verfahren nach einem der Ansprüche 3 bis 5, dadurch gekennzeichnet, dass das elektrische Signal (S2, S3) eine im allgemeinen positive und quadratförmige Spannung ist, die an den Elektromagnet (50) nach Verstärkung durch eine einerseits an ein Wechselstromversorgungsnetz (R) und andererseits an ein Regelsystem (80) angeschlossene Modulierungsvorrichtung (70) geliefert wird.

7. Verfahren nach Anspruch 6, dadurch gekennzeichnet, dass die vorgenannte Modulierungsvorrichtung (70) den Strom des Versorgungsnetzes in Gleichstrom umwandelt, bevor sie diesen zu einem Steuersignal nach dem Zustand des Regelsystems (80) moduliert, welches eine mit einem Analogschieber oder vorzugsweise mit nummerischen Tasten verbunden ist, umfasst.

8. Verfahren nach einem der Ansprüche 1 bis 7, dadurch gekennzeichnet, dass das Gehäuse (10) des Ventils, sowie die Modulierungsvorrichtung (70) in das vorgenannte Gerät (30) eingegliedert sind.

## Claims

1. Method of modulation of a gas flow rate, of the type consisting in displacing a valve (13) between a position of opening and a position of closing a passage-way (12) of the gas towards a burner (34) to be supplied therewith, the displacement of the valve being controlled by an electric signal (S2, S3) varying between two fixed values (VO, VI), the frequency (t3-t1) of variation of the signal towards one (VI) of these values being fixed whereas the period (P2, P3) of holding of the signal at the other value (VO) varies in accordance with the flow rate to be obtained, characterized in that it consists in alternately displacing the valve (13) between its opening and closing positions in accordance with the variation of the signal towards both aforesaid values (VO, VI), the aforesaid fixed frequency lying between 20 and 30 Hz and being preferably of the order of 25 Hz.

2. Method according to claim 1, characterized in that the displacement towards the opening position is effected at a fixed frequency and the period of holding in closed position (P2, P3) varies between O and 100% of the duration separating two displacements to the opening position, exclusively.

3. Method according to claim 1 or 2, characterized in that the aforesaid valve (13) is movably mounted in a fluid-tight casing (10) integrated into the aforesaid passage-way (12) and comprising fluid inlet and outlet connection fittings (21) and (22) as well as an electro-magnet (50) capable of displacing the said valve (13) between its opening and closing positions to respectively disengage and close the outlet connection fitting (22) hence the passage-way (12).

4. Method according to claim 3, characterized in that the valve (13) is mounted in the casing (10) through the medium of an oscillating arm (53) constantly urged by a spring (40) towards the position of closing of the valve and caused to bear upon a damping stop (56) when the valve (13) is in the opening position.

5. Method according to claim 3, characterized in that the valve (13) is mounted in the casing (10) through the medium of a flexible strip (63) constantly urged by a spring (40) towards the position of closing of the valve and set (l0b) into the casing with its end opposite to the electro-magnet (50).

6. Method according to one of claims 3 to 5, characterized in that the electrical signal (S2, S3) is a generally positive and square-shaped voltage supplied to the electro-magnet (50) after amplification by a modulator device (70) connected on the one hand to an alternating current feeding system (R) and on the other hand to a regulation system (80).

7. Method according to claim 6, characterized in that the aforesaid modulator device (70) converts the current of the feeding system into direct current before modulating it into a control signal according to the state of the regulation system (80) which comprises an electronic card connected to an analog slider or preferably to digital keys.

8. Method according to one of claims 1 to 7, characterized in that the casing (10) of the valve as well as the modulator device (70) are integrated into the aforesaid apparatus (30).
